# EUROPÄISCHE PATENTSCHRIFT

(11) **EP 3 156 302 B1**
(45) Veröffentlichungstag und Bekanntmachung des Hinweises auf die Patenterteilung: **08.07.2020**
(21) Anmeldenummer: 16193712.3
(22) Anmeldetag: 13.10.2016
(51) Int. Cl.: B61D 27/00, B60H 1/00

(54) **VORRICHTUNG ZUM KLIMATISIEREN EINES INNENRAUMS EINES SCHIENENFAHRZEUGS**
DEVICE FOR CONDITIONING AN INTERIOR OF A RAILWAY VEHICLE
DISPOSITIF DE CLIMATISATION D'UN HABITACLE D'UN VÉHICULE FERROVIAIRE

(30) Priorität: 16.10.2015 DE 102015117665
(43) Veröffentlichungstag der Anmeldung: 19.04.2017
(73) Patentinhaber: Bombardier Transportation GmbH, 10785 Berlin (DE)
(72) Erfinder: Thomas, Falk, 16761 Hennigsdorf (DE)
(74) Vertreter: Zimmermann & Partner Patentanwälte mbB

(56) Entgegenhaltungen:
- EP-A1- 0 570 288
- EP-A2- 0 326 044
- WO-A1-2010/145954
- WO-A1-2012/103641
- DE-A1-102010 032 636
- DE-C1- 19 847 504
- JP-A- S5 682 624
- US-A- 4 518 032

## Beschreibung

### Technisches Gebiet

Die vorliegende Erfindung betrifft ein Verfahren zum Betrieb einer Vorrichtung zum Klimatisieren eines Innenraums eines Schienenfahrzeugs. Das Schienenfahrzeug kann zum Personentransport dienen. Weiterhin betrifft die Erfindung eine Vorrichtung zum Klimatisieren eines Schienenfahrzeugs, wobei der Komfort von Fahrgästen erhöht wird.

### Vorbekannter Stand der Technik

Klimavorrichtungen für Fahrzeuge sind bereits aus der Kraftfahrzeug-, Schienenfahrzeugtechnik und aus Luftfahrt bekannt. Dabei gilt es, Temperaturen in Innenräumen dieser Fahr- und Flugzeuge beeinflussen zu können.

In der US-amerikanischen Patentanmeldung US 2006/130497 wird eine Klimaanlage mit einem Filter offenbart, wobei die Drehzahl eines Motors einer Belüftung der Klimaanlage und eine Temperatur der Luft am Auslass überwacht werden.

Die WO 2010/145954 A1 beschreibt eine Klimatisierungseinrichtung, welche eine Regelung auf Basis verschiedener Temperatursensoren vorsieht.

In der EP 0 570 288 A1 wird eine Belüftungsanlage mit einem Lüfter, einem Filter, einer Heizung, und einem Sensor zur Bestimmung der Geschwindigkeit der Luft hinter dem Lüfter offenbart.

### Nachteile des Standes der Technik

Die bisher bekannten Ausführungen einer Klimavorrichtung, einer Klimaanlage oder einer Klimatisierungseinrichtung erfordern bei Messungen von Funktionsparametern eine Interpretation von Messdaten, um eine verlässliche Aussage über den Betriebszustand einer Klimaanlage zu erhalten. Weiterhin birgt diese Interpretation eine gewisse Fehlerquelle, wodurch es zu unzutreffenden Annahmen kommen kann.

### Problemstellung

Aufgabe der vorliegenden Erfindung ist es daher, eine verbesserte Vorrichtung zum Klimatisieren eines Innenraums eines Schienenfahrzeugs bereitzustellen, wobei insbesondere eine verlässliche Bereitstellung eines klimatisierenden Luftstroms sichergestellt werden soll. Erfindungsgemäße Lösung

Die obige Aufgabe wird durch ein Verfahren nach Anspruch 1, eine Vorrichtung nach Anspruch 9 und ein Schienenfahrzeug nach Anspruch 15 gelöst. Vorteilhafte Ausführungsformen ergeben sich aus den abhängigen Unteransprüchen.

Das Verfahren dient dabei zum Betrieb einer Vorrichtung zum Klimatisieren eines Innenraums eines Schienenfahrzeugs. Die Vorrichtung weist einen Kanal zum Durchströmen von Luft gemäß einer Strömungsrichtung auf, wobei ein Einlass zum Ansaugen von Luft am Anfang und ein Auslass zum Ausblasen von Luft am Ende des Kanals vorgesehen sind.

In dem Kanal ist eine Filtervorrichtung zum Herausfiltern von Staub und Partikeln aus der Luft vorgesehen, wobei diese, nicht zwingend, unmittelbar am Einlass des Kanals angeordnet sein kann. Darunter fällt auch eine solche Anordnung, bei der die Filtervorrichtung unmittelbar oder im Bereich vor dem Einlass vorgesehen ist.

Der Filtervorrichtung nachgeschaltet folgt mittel- oder unmittelbar, betrachtet in Strömungsrichtung des Kanals, eine Wärmetauschervorrichtung zum Beeinflussen einer Temperatur der im Kanal vorhandenen Luft bzw. diesen durchströmenden Luft. Dabei kann die Wärmetauschervorrichtung zum Heizen und/oder Kühlen ausgebildet sein.

Mithilfe eines Lüfters wird Luft vom Einlass zum Auslass durch den Kanal gefördert. Gemäß einer Ausführungsform ist der Lüfter in Strömungsrichtung der Wärmetauschervorrichtung nachgeschaltet. Folglich saugt der Lüfter Umgebungsluft in den Einlass des Kanals, worauf der Luftstrom die Filtervorrichtung passiert und dadurch gereinigt wird. Darauf folgend durchströmt die Luft die Wärmetauschervorrichtung und erreicht den Lüfter.

Gemäß einer anderen Ausführungsform ist der Lüfter stromaufwärts der Wärmetauschervorrichtung angeordnet und saugt Luft durch die Filtervorrichtung und fördert bzw. pumpt diese angesaugte Luft weiter durch die Wärmetauschervorrichtung.

Unabhängig von den voran beschriebenen Ausführungsformen wird die Luft bzw. der Luftstrom in Richtung des Auslasses durch den Kanal gefördert, wobei eine Messvorrichtung zur Bestimmung eines Massestroms oder Volumenstroms des Luftstroms stromaufwärts zum Auslass im Kanal angeordnet ist. Die Messvorrichtung ist also der Wärmetauschervorrichtung, dem Lüfter und der Filtervorrichtung in Strömungsrichtung nachgeschaltet im Kanal vorgesehen. Mithilfe dieser Messvorrichtung kann entweder direkt oder indirekt der Volumenstrom- oder Massestrom, und gemäß einer Ausführung dadurch auch die Strömungsgeschwindigkeit des Luftstroms durch den Kanal, bzw. am Ort der Messung bestimmt werden.

Beispielsweise ist die Messvorrichtung im Bereich des Auslasses des Kanals angeordnet, sodass diese den Volumen- oder Massestrom erfasst, welcher gleich der, insbesondere ähnlich, oder im Wesentlichen proportional zur Ausströmgeschwindigkeit des Luftstroms direkt am oder nach dem Auslass ist. Auf diese Weise kann auch ein Rückschluss auf die Luftgeschwindigkeit im Innenraum ist gezogen werden.

Das Verfahren umfasst weiterhin die Schritte, dass zuerst ein SOLL-Volumen- oder Massestrom des Luftstroms im Kanal oder am Auslass des Kanals bestimmt oder vorgegeben wird. Dies kann beispielsweise ein zulässiger Maximalwert für den Volumen- oder Massestrom, oder auch - umgerechnet oder ermittelt - die Ausströmgeschwindigkeit des aus dem Auslass austretenden und in den Innenraum eintretenden Luftstroms sein. In einem weiteren Schritt wird der IST-Volumen- oder Massestrom des Luftstroms des Luftstroms durch den Kanal gemessen und mit dem SOLL-Wert des Volumen- oder Massestroms des Luftstroms verglichen. Der Ort der IST-Messung korreliert oder stimmt mit dem Ort über ein, an dem der SOLL-Volumen- oder Massestrom erwünscht ist. Wenn beispielsweise der SOLL-Volumen- oder Massestrom eine tatsächliche Strömungsgeschwindigkeit des ausströmenden Luftstroms am Auslass oder Luftgeschwindigkeit im Raum repräsentiert, und die Bestimmung bzw. Messung des IST-Volumen- oder Massestroms des Luftstroms an einem anderen Ort im Kanal stattfindet, so ist eine geeignete Korrelation zwischen dem Volumen- oder Massestrom oder der Strömungsgeschwindigkeit am Auslass oder im Innenraum und dem Volumen- oder Massestrom oder der Strömungsgeschwindigkeit an der Messvorrichtung zu identifizieren und zu berücksichtigen. Grundsätzlich besteht die Möglichkeit, über die Dichte der Luft, den Massenstrom in einen Volumenstrom oder umgekehrt umzurechnen und diesen für die weiteren Betrachtungen zu nutzen. Die Umrechnung kann dabei in Abhängigkeit von der Temperatur des Luftstromes erfolgen.

Entsprechend der Differenz zwischen SOLL-Volumen- oder Massestrom oder SOLL-Strömungsgeschwindigkeit und der IST-Volumen- oder Massestrom oder der IST-Strömungsgeschwindigkeit wird in einem nächsten Schritt die Förderleistung oder auch die Drehzahl des Lüfters derart eingestellt, dass sich der vorhandene IST-Volumen- oder Massestrom oder die IST-Strömungsgeschwindigkeit dem Zielwert des SOLL-Volumen- oder Massestroms oder der SOLL-Strömungsgeschwindigkeit des Luftstroms angleicht.

Gemäß einer Ausführungsform kann der SOLL-Volumen- oder Massestrom oder die SOLL-Strömungsgeschwindigkeit des Luftstroms durch den Kanal derart gewählt werden, dass eine gewünschte Luftgeschwindigkeit im Innenraum oder Ausströmgeschwindigkeit des Luftstroms an oder direkt nach dem Auslass bestimmten Parametern entspricht, insbesondere einen Maximalwert nicht überschreitet. Es können dazu wiederum Umrechnungsalgorithmen oder Umrechnungstabellen verwendet werden, insbesondere um von der IST-Volumen- oder Massestrom oder der IST-Strömungsgeschwindigkeit am Ort der Messung bzw. der Messvorrichtung im Kanal auf den realen, ausströmenden Volumen- oder Massestrom oder die reale Ausströmgeschwindigkeit an oder in unmittelbarer Umgebung nach dem Auslass zu schließen.

Denkbar ist beispielsweise, dass eine Luftgeschwindigkeit im Innenraum bzw. eine Ausströmgeschwindigkeit des Luftstroms beim Einströmen in den Innenraum eines Fahrzeugs einen bestimmten Wert nicht überschreiten darf, um Komfortansprüchen von Personen in diesem Innenraum gerecht zu werden. Ein zu starker Luftstrom, d. h. ein Luftstrom mit einer hohen Strömungsgeschwindigkeit, Volumen- oder Massenstrom, kann von Personen in dem Innenraum unangenehm als Zugluft empfunden werden und ist deshalb unerwünscht.

Gemäß einer weiteren Ausführungsform des Verfahrens wird mithilfe der Messvorrichtung eine Verringerung des Luftstroms, bedingt durch Verschmutzung der Filtervorrichtung und/oder einer Komponente, z.B. der Wärmetauschervorrichtung und deren im Luftstrom angeordneter Verdampfer, durch die Messvorrichtung detektiert und mithilfe der Regeleinheit über den Lüfter kompensiert. Auf diese Weise wird erstmalig erreicht, dass die Dimensionierung von Wärmetauschern für solche Vorrichtungen zum Klimatisieren geringer ausfallen kann. Anstelle einer Überdimensionierung der Wärmetauscher, um z.B. die Kälteleistung auch bei einem verringerten Volumenstrom bzw. Massenstrom zur Verfügung zu stellen, kann nun der reduzierte Volumenstrom bzw. Massenstrom angehoben und die erforderliche Kälteleistung wieder bereitgestellt werden. Auf diese Weise wird verhindert, dass unnötige Leistungsreserven der Wärmetauschervorrichtung vorgehalten werden müssen, um z.B. eine erforderliche Kälteleistung zu erzielen.

Gemäß einer Ausführung wird der Wert des Volumen- oder Massestroms oder der Strömungsgeschwindigkeit des ausströmenden Luftstroms aus dem Auslass und damit auch des sich im Innenraum befindlichen Luftstroms bei der erfindungsgemäßen Vorrichtung auf einen Maximalwert begrenzt, sodass der Komfort der Passagiere nicht beeinträchtigt wird. Dies erfolgt durch die oben beschriebene Regelung bzw. Regeleinheit in Zusammenwirken mit der Messvorrichtung im Kanal. Wird infolge des Betriebs der Vorrichtung zum Klimatisieren deren Filtervorrichtung zunehmend zugesetzt, so kann die damit verbundene Reduzierung der Ausströmgeschwindigkeit bzw. des Volumen- oder Massenstroms durch die Vorrichtung durch Erhöhung der Lüfterleistung kontinuierlich kompensiert werden. Damit kann die Luftgeschwindigkeit im Raum unabhängig von einem Zustand der Filtervorrichtung konstant und innerhalb der Komfortparameter gehalten werden.

Gemäß eines Aspekts der Erfindung weist die Messvorrichtung einen Massenstromsensor zur Messung des Massenstroms des Luftstroms im Kanal auf. Die Messvorrichtung zur Messung eines Luftmassenstroms kann beispielsweise ein Luftmassenstromsensor sein, der im Englischen als "mass air flow meter" oder kurz MAF bezeichnet wird. Die Verwendung eines Luftmassenstromsensors bietet den Vorteil, dass der Luftmassenstrom direkt erfasst wird und daher die Masse der durch den Kanal strömenden Luft von der Regeleinheit als Regelgröße verwendet wird.

Auf Basis einer Messung des Massenstroms wird im Folgenden der IST-Volumenstrom, und insbesondere auf diesem Wege auch die Strömungsgeschwindigkeit des Luftstroms bestimmt. Hierzu erfolgt eine Umrechnung über die Dichte. Diese kann infolge der Erfassung der Temperatur am Auslass temperaturabhängig erfolgen.

Die Verwendung eines Massenstromsensors birgt den Vorteil, dass die Konzeption der Messvorrichtung im Kanal äußerst einfach ist, da Massenstromsensoren robust, zuverlässig und kostengünstig sind.

Gemäß einer besonderen Ausprägung der Erfindung wird der Luftdruck des Luftstroms, insbesondere vorab festgelegt und/oder nicht gemessen und bewertet. Da die Dichte der durch den Kanal strömenden Luft vorrangig von der Temperatur abhängig ist, kann bevorzugt ein erster Temperatursensor im Kanal, bevorzugt in Strömungsrichtung nach dem Lüfter, vorgesehen sein.

In diesem Zusammenhang kann direkt aus dem gemessenen Massenstrom und der Temperatur auf den Volumenstrom des Luftstroms oder auf die Strömungsgeschwindigkeit geschlossen werden. Insbesondere kann dazu ein vorab angenommenes Verhältnis zwischen Temperatur und Dichte des Luftstroms verwendet werden. Dies bewirkt, dass die Vorrichtung zur Klimatisierung eines Fahrzeugs besonders einfach und günstig dargestellt werden kann. Entgegen der bestehenden Expertenerwartung wird gemäß dieser Ausführungsform gerade nicht der Luftdruck aufgenommen. Schwankungen des zu regelnden Volumenstroms oder der Strömungsgeschwindigkeit, welche durch variierenden Luftdruck bedingt sind, werden dabei bewusst in Kauf genommen, um die vorteilhafte Ausbildung der Vorrichtung zu erreichen.

Der Luftmassensensor kann beispielsweise nach dem Prinzip eines Hitzdrahtanemometers arbeiten. Hitzdrahtanemometer sind sehr zuverlässig, benötigen nur einen geringen Bauraum und verfügen nicht über sich bewegenden Teile. Die Messvorrichtung zur Messung eines Luftmassenstroms kann daher auch über zwei oder mehrere Luftmassensensoren verfügen.

Die Verwendung von Luftmassensensoren bietet weiterhin den Vorteil, dass eine Erfassung nur an einer Stelle, beispielsweise nah am Auslass, erfolgen muss und z.B. hierfür keine Querschnittsänderungen erforderlich sind, wie bei Differenzdruck-Messern. Regelungen auf Basis von Druckunterschieden benötigen hierzu Sensoren in unterschiedlichen Bereichen des Kanals, die auch unterschiedliche Temperaturen aufweisen können.

Alternativ zur oben genannten Ausführungsform kann die Messvorrichtung als Durchflusssensor zu Bestimmung eines Volumenstroms ausgeführt werden. Dadurch wird die Bestimmung der Strömungsgeschwindigkeit besonders einfach, weil Druck und Temperatur des Luftstroms im Kanal zur Bestimmung der Strömungsgeschwindigkeit in diesem Fall nicht notwendiger Weise bekannt sein müssen. Denkbar dafür sind unmittelbare Volumenzähler oder mittelbare Volumenzähler.

Gemäß einer Ausführung kann die Temperatur des Luftstroms im Kanal mittels des ersten Temperatursensors gemessen werden, wobei das Messergebnis von der Regeleinheit dazu verwendet wird, die Wärmetauschervorrichtung hinsichtlich des Bedarfs an Wärme- bzw. Kälteleistung optimal anzusteuern und den Angleich der IST-Temperatur an die SOLL-Temperatur, insbesondere im Raum, schneller vorzunehmen. Weiterhin kann diese Temperatur als Korrekturfaktor für die Dichte des Luftvolumenstromes dienen.

Gemäß einer weiteren Ausführungsform des Verfahrens wird in einem ersten Schritt die SOLL-Temperatur für den Innenraum bestimmt oder eingestellt. In einem zweiten Schritt wird die IST-Temperatur in dem Innenraum des Fahrzeugs mittels eines zweiten, im Innenraum angeordneten Temperatursensors gemessen und mit der SOLL-Temperatur verglichen. Auf Basis einer festgestellten Differenz der Temperaturen wird der Wärme- oder Kälteleistungsbedarf bestimmt und die Wärmetauschervorrichtungen über die Regeleinheit angesteuert, sodass sich die IST-Temperatur der SOLL-Temperatur des Innenraumes angleicht.

Die Regelung der Temperatur kann weiterhin verbessert werden, indem gemäß einer weiteren Ausführungsform die Außentemperatur mittels eines dritten Temperatursensors gemessen wird und zur Steuerung des Wärmetauschers durch die Regeleinheit verwendet wird.

Zudem ist es möglich, zumindest teilweise Luft aus dem Innenraum über einen Umluftkanal in einen Anfangsbereich, insbesondere Lufteintrittsbereich des Kanals zuzuführen, wobei insbesondere eine Temperatur des Luftstroms im Umluftkanal mittels eines vierten Temperatursensors gemessen werden kann.

Im Rahmen der Erfindung wird eine Vorrichtung zum Klimatisieren eines Innenraums eines Schienenfahrzeugs offenbart, welche einen Kanal zum Führen und/oder Konditionieren eines Luftstroms in einer Strömungsrichtung mit einem Einlass und einem Auslass zur Abgabe des Luftstroms, insbesondere über ein Kanalsystem in den Innenraum des Fahrzeugs aufweist. Der Kanal wiederum umfasst eine Filtervorrichtung, eine Wärmetauschervorrichtung, einen Lüfter und eine Messvorrichtung zur Bestimmung des Luftmasse- oder Volumenstroms, oder der Strömungsgeschwindigkeit eines Luftstroms im Kanal. Dabei ist die Messvorrichtung der Wärmetauschervorrichtung dem Lüfter und der Filtervorrichtung in Strömungsrichtung nachgeschaltet im Kanal oder dem nachfolgenden Zuluftkanal vorgesehen. Dies führt zu einer Verbesserung der Regelung der Vorrichtung, da die für die Regelung relevanten Daten, wie Luftmassen- oder Volumenstrom, oder Strömungsgeschwindigkeit, in Strömungsrichtung nach den Komponenten aufgenommen bzw. gemessen werden, welche den Luftstrom beeinflussen würden.

Gemäß einer Ausführung umfasst die Vorrichtung zum Klimatisieren ein Klimagerät, wobei der Kanal im Klimagerät angeordnet ist. Dem Klimagerät nachgeschaltet ist ein Zuluftkanalsystem zur Verteilung der Luft auf die Auslässe im Innenraum des Schienenfahrzeugs vorgesehen. Weiterhin kann dem Klimagerät vorgeschaltet ein primär Luftkanalsystem angeordnet sein, welches den Einlass des Klimageräts mit einem Einlass an einer Außenseite des Schienenfahrzeugs verbindet. In diesem Zusammenhang kann gemäß einer speziellen Ausführungsform die Messvorrichtung in dem nachgeschalteten Zuluftkanal System installiert sein.

Die Vorrichtung umfasst weiterhin eine Regeleinheit zum Einstellen der Drehzahl oder der Förderleistung des Lüfters, die mit der Messvorrichtung zu Bestimmung des Luftvolumen- oder Massenstroms, und damit auch - unter Berücksichtigung des jeweiligen Querschnitts des Kanals - der Strömungsgeschwindigkeit verbunden und dazu eingerichtet ist, das oben genannte Verfahren oder Ausführungsformen davon auszuführen. Dafür muss die Regeleinheit mit entsprechender Vorabinformation und Regelkreisen ausgestattet sein, um die vorteilhafte Regelung wie oben beschrieben umsetzen zu können. Insbesondere ist in diesem Zusammenhang anzuführen, dass die Regeleinheit mit Informationen zu Verhältnissen von Massenstrom, Volumenstrom, Strömungsgeschwindigkeit und Querschnitten des Kanals ausgestattet sein muss, insbesondere unter Berücksichtigung von Temperatur und/oder unter Nichtberücksichtigung des Drucks.

Gemäß einer Ausführungsform ist die Regeleinheit dabei derart ausgebildet oder weist entsprechende Umrechnungsalgorithmen oder Umrechnungstabellen (Look-Up-Table) auf, sodass aus den Messergebnissen der Messvorrichtung ein IST-Volumenstrom oder eines IST-Strömungsgeschwindigkeit des Luftstroms am Ort der Messvorrichtung im Kanal bestimmt werden kann. Zudem ist die Regeleinheit so gestaltet und eingerichtet, dass mittels des bestimmten IST-Volumenstromes ein SOLL-Volumenstrom, oder mittels der bestimmten IST-Strömungsgeschwindigkeit eine SOLL-Strömungsgeschwindigkeit der Luft durch den Kanal einstellbar ist.

Gemäß einer Ausführungsform weist die Vorrichtung einen ersten Temperatursensor auf, welcher dem Lüfter nachgeschaltet und insbesondere der Messvorrichtung vorgeschaltet im Kanal angeordnet ist. Um die Messsignale des ersten Temperatursensors an die Regeleinheit zu übertragen, ist dieser mit der Regeleinheit verbunden. Weiterhin ist die Regeleinheit mit der Wärmetauschervorrichtung verbunden und dazu ausgebildet den Betrieb dieser zu steuern, sodass eine Temperatur des Luftstroms im Kanal oder des aus dem Auslass ausströmenden Luftstroms einstellbar ist. Somit ist es möglich, in gleichzeitiger Weise und unabhängig vom Zustand der Filtervorrichtung sowohl Ausströmgeschwindigkeit und Temperatur des aus dem Auslass ausströmenden Luftstroms einzustellen. Dies führt zu einem erhöhten Komfort der Passagiere im Innenraum des Fahrzeugs.

Eine weitere Ausführungsform offenbart, dass in dem Innenraum des Fahrzeugs ein zweiter Temperatursensor angebracht ist, welcher durch Übertragungsmittel zum Übertragen von Messsignalen mit der Regeleinheit verbunden ist. Dies führt zu einer weiteren Verbesserung der Regelung der Vorrichtung, da der Temperaturzustand im Innenraum des Fahrzeugs zur Regelung des Luftstroms verwendet werden kann.

Weiterhin ist gemäß einer Ausführungsform vorgesehen, einen dritten Temperatursensor außen am Fahrzeug anzuordnen, welcher mittels Übertragungsmittel mit der Regeleinheit verbunden ist. Die Information über die außen am Fahrzeug vorliegende Temperatur führt zu einer weiteren Verbesserung der Regelung der Vorrichtung, und wird insbesondere zum Einstellen der Leistung der Wärmetauschervorrichtung verwendet.

In Erweiterung dieses Grundprinzips wird erfindungsgemäß vorgeschlagen, einen Umluftkanal zum Zuführen von Luft aus dem Innenraum hin zur Vorrichtung, insbesondere in Strömungsrichtung in einen Bereich des Kanals vor der Filtervorrichtung, vorzusehen. Auf diese Weise kann der aus dem Auslass ausströmende und in den Innenraum einströmende Luftstrom vollständig oder teilweise durch Luft aus dem Innenraum gebildet werden. Somit kann der Energieaufwand beim Kühlen oder Heizen des Luftstroms reduziert werden, wenn das Temperaturniveau der rückgeführten Luft bereits der gewünschten Temperatur entspricht.

Weiterhin wird offenbart, einen vierten Temperatursensor im Umluftkanal vorzusehen, welcher mit der Regeleinheit zum Übertragen von Messsignalen verbunden ist. Auf diese Weise ist eine Lufttemperatur im Umluftkanal messbar, wodurch die Temperaturregelung abermals präzisiert wird.

Gemäß einer Ausführungsform ist die Wärmetauschervorrichtung als kombinierte Heiz-und/oder Kühlvorrichtung, vorzugsweise als eine einzige Baueinheit, ausgebildet, wodurch ermöglicht wird, den Luftstrom zu kühlen als auch zu erwärmen und ein besonders breites Temperaturspektrum zu ermöglichen. Denkbar ist auch, dass solche Funktionen von einer Mehrzahl von unterschiedlichen Wärmetauschervorrichtungen ausgeführt werden, wobei ein Verdampfer zum Kühlen des Luftstroms und/oder eine Heizvorrichtung zum Erwärmen des Luftstroms im Kanal vorgesehen ist. Vorzugsweise sind die Heizvorrichtung und die Kühlvorrichtung direkt beieinander im Kanal angeordnet.

Gemäß eines Aspekts der Erfindung wird offenbart, das beschriebene Ausführungsformen des Verfahrens und beschriebenen Ausführungsformen der Vorrichtung zu verwenden, um negative Auswirkungen einer Verschmutzung der Filtervorrichtung und/oder der Wärmetauschervorrichtung zu kompensieren und diesen entgegenzuwirken. Insbesondere die Verwendung des Verfahrens und der Vorrichtung im Zusammenhang mit Personentransportfahrzeug bewirkt eine Steigerung des Komforts der betroffenen Passagiere. Im Rahmen der Erfindung wurde erkannt, dass eine Verschmutzung von Komponenten der Vorrichtung zum Klimatisieren kontinuierlich erfolgt, jedoch währenddessen ständig Passagiere betroffen sind. Eine Verringerung des Zuluftvolumenstroms kann dabei zu einer Nichteinhaltung der geforderten klimatischen Bedingungen führen. Ein zu großer Zuluftvolumenstrom wird hingegen im Innenraum als Zugluft wahrgenommen und ist zu vermeiden. Diese Erkenntnis ermöglichte, die beschriebenen Ausführungsformen des erfindungsgemäßen Verfahrens erstmalig vorteilhaft einzusetzen.

Gemäß einer weiteren Ausführung wird ein Schienenfahrzeug offenbart, umfassend eine Vorrichtung zum Klimatisieren gemäß einer oder mehreren der oben beschriebenen Ausführungen.

Die vorstehend beschriebenen Ausführungsformen können beliebig miteinander kombiniert werden.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.
Fig. 1 zeigt ein Schienenfahrzeug mit einer Vorrichtung zum Klimatisieren, und
Fig. 2 ist eine schematische Darstellung der Vorrichtung gemäß Fig. 1.

### Ausführungsbeispiele

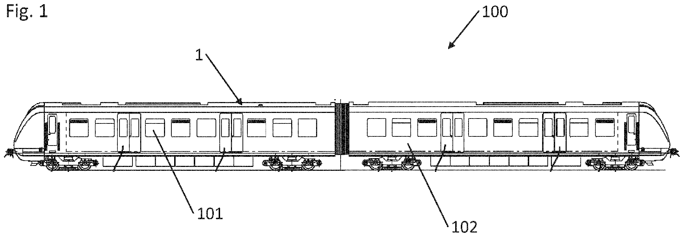

Fig. 1 zeigt ein Schienenfahrzeug 100 mit einer Vorrichtung 1 zum Klimatisieren eines Innenraums 101 des Schienenfahrzeugs 100. Die Vorrichtung 1 kann dabei zumindest teilweise in einem Bereich des Fahrzeugdaches angeordnet sein.

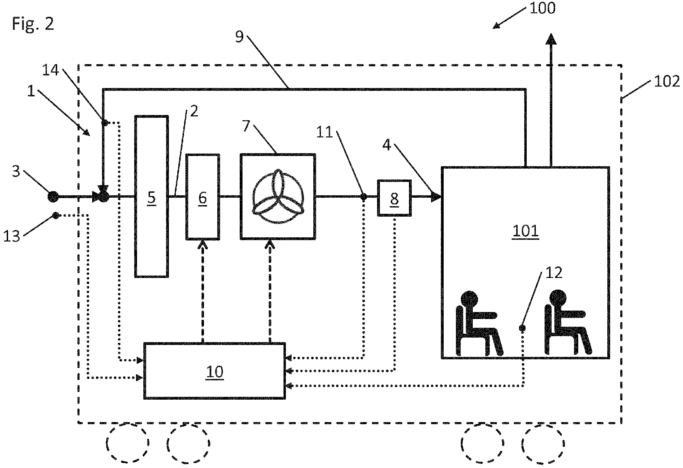

Anhand der schematischen Fig. 2 soll die Funktionsweise der Vorrichtung 1 zum Klimatisieren des Innenraums 101 des Schienenfahrzeugs 100 verdeutlicht werden. In einem Wagenkasten 102 des Schienenfahrzeugs 100 ist der Innenraum 101 zur Aufnahme von Personen angeordnet. Die Vorrichtung 1 zum Klimatisieren ist dabei im Wesentlichen innerhalb des Wagenkastens 102 vorgesehen.

Gemäß einer hier nicht dargestellten Ausführungsform kann die Vorrichtung zum Klimatisieren zumindest teilweise oder vollständig auf dem Dach außerhalb des Wagenkastens, an einem Unterflurbereich unterhalb des Wagenkastens oder auch im Wagenkasten angeordnet sein.

Die Vorrichtung 1 zum Klimatisieren weist dabei ein Klimagerät 15 mit einem Kanal 2 auf, welcher einen Einlass 3 beispielsweise außerhalb des Wagenkastens 102 und einen Auslass 4 in ein nachgelagertes Kanalsystem zur Luftverteilung in den Innenraum 101 und somit eine strömungstechnische Verbindung zwischen Umgebung und Innenraum 101 herstellt.

Im Kanal 2 bzw. im Klimagerät 15 ist eine Filtervorrichtung 5, eine Wärmetauschervorrichtung 6, einen Lüfter 7 und eine Messvorrichtung 8 zum Messen eines Volumen- oder Massenstroms eines sich im Kanal 2 bewegenden Luftstroms angeordnet. Die Messvorrichtung 8 kann dabei auch im dem Klimagerät 15 nachgelagerten Luftkanalsystem 16 installiert sein. Entsprechend der Aufzählungsreihenfolge sind diese einzelnen Komponenten in Strömungsrichtung im Kanal 2 angeordnet, wobei unmittelbar oder mittelbar nach dem Einlass 3 die Filtervorrichtung 5 nachgeschaltet vorgesehen ist, gefolgt von dem Wärmetauscher 6, dem Lüfter 7 und letztendlich von der Messvorrichtung 8.

Weiterhin ist ein Umluftkanal 9 vorgesehen, welcher den Innenraum 101 mit dem Kanal 2 strömungstechnisch verbindet, und somit mittels geeigneter Schaltelemente und gegebenenfalls Lüftungsvorrichtungen Luft aus dem Innenraum 101 in einen Bereich am Einlass 3 oder in Strömungsrichtung vor der Filtervorrichtung 5 in den Kanal eingebracht werden kann. Auf diese Weise kann der Luftstrom im Kanal 2 vollständig oder teilweise durch Luft aus dem Innenraum 101 realisiert werden. Bei vollständiger Versorgung über den Umluftkanal 9 zirkuliert die Luft zwischen Innenraum 101 und Vorrichtung 1, wodurch der Innenraum 1 keine strömungstechnische Verbindung zur Umgebung aufweist. Dies kann vorteilhaft sein, um zum Beispiel bei einer Tunneldurchfahrt die Fahrgäste vor einer Belastung durch verschmutzte Luft zu schützen.

Weiterhin umfasst die Vorrichtung 1 eine Regeleinheit 10, wobei die Regeleinheit 10 dazu ausgebildet und mit der Wärmetauschervorrichtung 6 und dem Lüfter 7 so verbunden ist, dass eine Kühl- oder Heizleistung der Wärmetauschervorrichtung 6 und/oder eine Förderleistung oder Drehzahl des Lüfters 7 durch die Regeleinheit 10 eingestellt werden können.

Mithilfe der Messvorrichtung 8 wird der IST-Wert des Luftmassenstroms, des Volumenstroms bzw. der Strömungsgeschwindigkeit des Luftstroms im Kanal 2 oder Luftkanalsystem 16 gemessen und an die Regeleinheit 10 weitergegeben. Die Messung der Strömungsgeschwindigkeit kann über den Volumenstrom oder den Massestrom oder mittels anderer Messverfahren durchgeführt werden. Für den Fall wird, dass - wie im vorliegenden Ausführungsbeispiel - die Messvorrichtung 8 nicht unmittelbar am Auslass 4 angeordnet ist, kann die Regeleinheit 10 mit Umrechnungsalgorithmen oder Umrechnungstabellen ausgestattet sein, um vom Messwert des Volumen- der Massestroms am Ort der Messvorrichtung 8 auf die reale Strömungsgeschwindigkeit direkt am oder kurz hinter dem Auslass 4 oder Luftgeschwindigkeit im Raum 101 schließen zu können.

Grundsätzlich ist die Regeleinheit 10 so eingestellt, dass die Luftgeschwindigkeit im Innenraum 101 oder Strömungsgeschwindigkeit des Luftstroms direkt am Auslass 4 einen gewissen maximalen Wert nicht überschreitet. Wird während des Einsatzes der Vorrichtung 1 die Filtervorrichtung 5 zunehmend verschmutzt, erhöht sich der Strömungswiderstand durch diese. Dadurch reduziert sich der Volumenstrom im Kanal 2, was wiederum durch die Messvorrichtung 8 festgestellt werden kann. Entsprechend dieser Reduktion erhöht die Regeleinheit 10 die Förderleistung bzw. Drehzahl des Lüfters 7, um den erhöhten Strömungswiderstand durch die verstopfte Filtervorrichtung 5 auszugleichen. Somit wird sichergestellt, dass in jedem Fall ein ausreichender Luftstrom in den Innenraum 101 des Schienenfahrzeugs 100 eingeleitet werden kann, der für die Erzeugung speziell der Kälteleistung erforderlich ist.

Weiterhin ist eine Reihe von Temperatursensoren vorgesehen, wobei je nach Ausführungsform diese auch einzeln oder in Kombination zum Einsatz kommen können. Sämtliche Messsignale der Temperatursensoren werden an die Regeleinheit 10 weitergegeben und können somit zur Ansteuerung der Wärmetauschervorrichtung 6 verwendet werden.

Ein erster Temperatursensor 11 ist im Kanal 2, insbesondere im Bereich des Klimageräts 15 angeordnet, um die Temperatur des Luftstroms im Kanal 2 bzw. Klimagerät 15 aufnehmen zu können. Auf diese Weise umfasst die Regelung die Fähigkeit die Temperatur des Luftstroms in dem Kanal 2, und damit auch die des ausströmenden Luftstroms, mittels der Wärmetauschervorrichtung 6 einstellen zu können.

Der erste Temperatursensor 11 ist vorzugsweise direkt oder in unmittelbarer Umgebung der Messvorrichtung 8 angeordnet.

In verbesserter Art und Weise wird durch einen zweiten Temperatursensor 12 die Temperatur im Innenraum 101 gemessen, sodass die reale Situation im Bereich der Fahrgäste aufgenommen und zur Temperaturregelung verwendet werden kann.

Mit dem Wissen um die Temperatur an einer Außenseite des Schienenfahrzeugs 100 bzw. der Außentemperatur wird ermöglicht, die Effektivität der Ansteuerung und insbesondere die Leistungsaufnahme der Wärmetauschervorrichtung 6 zu optimieren. Zur Messung der Außentemperatur ist an einer Außenseite des Wagenkastens 102 des Schienenfahrzeugs 100 ein dritter Temperatursensor 13 vorgesehen.

Im Fall dass eine Rückführung von Luft aus dem Innenraum 101 in den Kanal 2 vorgenommen wird, kann gemäß eines Ausführungsbeispiels die Temperatur im Umluftkanal 9 mithilfe eines vierten Temperatursensors 14 gemessen werden und an die Regeleinheit 10 weitergegeben werden. Die Kenntnis über die Temperatur im Umluftkanal 9 bewirkt, dass eine Temperatur des in den Innenraum 101 ein strömenden Luftstroms beispielsweise auch durch Mischen von Luft aus der Umgebung und aus dem Innenraum 101 eingestellt werden kann.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

### Bezugszeichenliste

- 1: Vorrichtung zum Klimatisieren
- 2: Kanal
- 3: Einlass
- 4: Auslass
- 5: Filtervorrichtung
- 6: Wärmetauschervorrichtung
- 7: Lüfter
- 8: Messvorrichtung
- 9: Umluftkanal
- 10: Regeleinheit
- 11: erster Temperatursensor
- 12: zweiter Temperatursensor
- 13: dritter Temperatursensor
- 14: vierter Temperatursensor
- 15: Klimagerät
- 16: Zuluftkanal
- 100: Schienenfahrzeug
- 101: Innenraum
- 102: Wagenkasten

## Patentansprüche

1. Verfahren zum Betrieb einer Vorrichtung (1) zum Klimatisieren eines Innenraums (101) eines Schienenfahrzeugs (100) wobei die Vorrichtung (1) einen Kanal (2) zum Führen eines Luftstroms in einer Strömungsrichtung aufweist,
der Kanal (2) einen Einlass (3) und einen Auslass (4) zur Abgabe des Luftstroms in den Innenraum (101), eine Filtervorrichtung (5), eine Wärmetauschervorrichtung (6), einen Lüfter (7) und eine Messvorrichtung (8) zur Bestimmung eines Massestroms oder Volumenstroms aufweist, und die Messvorrichtung (8) der Wärmetauschervorrichtung (6), dem Lüfter (7) und der Filtervorrichtung (5) in Strömungsrichtung nachgeschaltet im Kanal (2) angeordnet ist, und
wobei das Verfahren die Schritte aufweist:
a. Vorgeben eines SOLL-Volumen- oder Massestroms für den Luftstrom;
b. Bestimmen eines IST-Volumen- oder Massestroms des Luftstroms mittels der Messvorrichtung (8); und
c. Einstellen einer Förderleistung des Lüfters (7) unter Verwendung einer Regeleinheit (10), so dass sich der Volumen- oder Massestrom dem SOLL-Volumenstrom- oder Massestrom des Luftstroms angleicht.

2. Verfahren nach Anspruch 1, wobei das Einstellen der Förderleistung des Lüfters (7) derart erfolgt, dass eine Reduzierung des IST-Volumen- oder Massestroms infolge eines Zusetzens der Filtervorrichtung (5) ausgeglichen wird.

3. Verfahren nach Anspruch 1 oder 2, wobei die Messvorrichtung (8) einen Massenstromsensor aufweist, und der IST-Volumenstrom des Luftstroms unter Verwendung des gemessenen Massenstroms bestimmt wird.

4. Verfahren nach einem der voran gestellten Ansprüche, aufweisend einen ersten Temperatursensor (11), umfassend den Schritt: Messen einer Temperatur des Luftstroms im Kanal (2) mittels des ersten Temperatursensors (11).

5. Verfahren nach einem der voran gestellten Ansprüche, wobei bei einer Bestimmung einer Dichte ein Druck des Luftstroms vorab festgelegt wird, und insbesondere nicht im Kanal (2) gemessen wird.

6. Verfahren nach einem der voran gestellten Ansprüche, umfassend die Schritte:
a. Vorgabe einer SOLL-Temperatur für den Innenraum (101);
b. Messen der IST-Temperatur im Innenraum (101) mittels des zweiten Temperatursensors (12);
c. Einstellen der Förderleistung des Lüfters (7) und/oder Einstellen der Wärmetauschervorrichtung (6) derart, dass sich die IST-Temperatur des Luftstroms im Innenraum (101) der SOLL-Temperatur für den Innenraum (101) angleicht.

7. Verfahren nach einem der voran gestellten Ansprüche, umfassend den Schritt: Messen einer Außentemperatur eine Umgebungsluft mittels des dritten Temperatursensors (13).

8. Verfahren nach einem der voran gestellten Ansprüche, umfassend die Schritte:
a. Zumindest teilweises Rückführen von Luft aus dem Innenraum (101) über einen Umluftkanal (9) in einen Bereich des Kanals (2), welcher stromaufwärts zur Wärmetauschervorrichtung (6) liegt, und insbesondere
b. Messen einer Temperatur des Luftstroms im Umluftkanal (9) mittels des vierten Temperatursensors (14).

9. Vorrichtung (1) zum Klimatisieren eines Innenraums (101) eines Schienenfahrzeugs (100) mit
- einem Kanal (2) zum Führen eines Luftstroms in einer Strömungsrichtung aufweisend einen Einlass (3) und einen Auslass (4) zur Abgabe des Luftstroms in den Innenraum (101), eine Filtervorrichtung (5), eine Wärmetauschervorrichtung (6), einen Lüfter (7) und eine Messvorrichtung (8) zur Bestimmung eines SOLL-Volumen- oder Massestroms, wobei die Messvorrichtung (8) der Wärmetauschervorrichtung (6), dem Lüfter (7) und der Filtervorrichtung (5) in Strömungsrichtung nachgeschaltet im Kanal (2) angeordnet ist, und
- mit einer Regeleinheit (10) zum Einstellen einer Förderleistung des Lüfters (7), die mit der Messvorrichtung (8) verbunden und eingerichtet ist, das Verfahrens nach einem der voran gestellten Ansprüche auszuführen.

10. Vorrichtung (1) nach Anspruch 9, **gekennzeichnet dadurch, dass** die Messvorrichtung (8) einen Massenstromsensor zur Erfassung eines Massenstroms des Luftstroms und einen ersten Temperatursensor (11) aufweist,
- wobei der erste Temperatursensor (11) dem Lüfter (7) nachgeschaltet im Kanal (2) angeordnet und mit der Regeleinheit (10) verbunden ist, und
- die Regeleinheit (10) so ausgestaltet ist, dass sie aus einem erfassten Luftmassenstrom und aus der vom Temperatursensor (11) erfassten Temperatur einen entsprechenden Volumenstrom ermittelt, und insbesondere der Volumenstrom der Regelung einer Strömungsgeschwindigkeit zugrunde gelegt wird.

11. Vorrichtung (1) nach Anspruch 10, wobei die Regeleinheit (10) derart ausgestaltet und mit der Wärmetauschervorrichtung (6) verbunden ist, dass die Temperatur des Luftstroms im Kanal (2) oder der aus dem Auslass (4) ausströmenden Luft einstellbar ist.

12. Vorrichtung nach einem der voran gestellten Ansprüche 9 bis 11, **gekennzeichnet dadurch, dass** die Filtervorrichtung (5), die Wärmetauschervorrichtung (6), der Lüfter (7) und die Messvorrichtung (8) in dieser Reihenfolge in Strömungsrichtung einander nachgeschaltet im Kanal (2) angeordnet sind.

13. Vorrichtung (1) nach einem der voran gestellten Ansprüche, **gekennzeichnet durch** einen Umluftkanal (9) zum Rückführen von Luft aus dem Innenraum (101) in einen Bereich des Kanals (2), welcher stromaufwärts zur Wärmetauschervorrichtung (6) liegt.

14. Vorrichtung (1) nach Anspruch 13, **gekennzeichnet durch** einen vierten Temperatursensor (14), welcher mit der Regeleinheit (10) zum Übertragen von Messsignalen verbunden ist und derart im Umluftkanal (9) angeordnet ist, dass eine Lufttemperatur im Umluftkanal (9) messbar ist.

15. Schienenfahrzeug mit einem Innenraum (101), **gekennzeichnet durch** eine Vorrichtung (1) zum Klimatisieren nach einem der voran gestellten Ansprüche und einen im Innenraum (101) angeordneten zweiten Temperatursensor (12), und insbesondere umfassend einen außen am Fahrzeug vorgesehenen, dritten Temperatursensor (13).

## Claims

1. A method for operating a device (1) for air conditioning an interior (101) of a rail vehicle (100), wherein the device (1) has a duct (2) for guiding an air flow in a flow direction,
the duct (2) has an inlet (3) and an outlet (4) for delivering the air flow into the interior (101), a filter device (5), a heat exchange apparatus (6), a fan (7), and a measuring device (8) for determining a mass flow or a volume flow, and the measuring device (8) is arranged in the duct (2) downstream in the flow direction of the heat exchange apparatus (6), the fan (7) and the filter device (5), and
wherein the method has the steps:
a. specifying a nominal volume flow or mass flow for the air flow;
b. determining an actual volume flow or mass flow of the air flow by means of the measuring device (8); and
c. setting a conveying rate of the fan (7) using a control unit (10) so that the volume flow or mass flow matches the nominal volume flow or mass flow of the air flow.

2. The method according to claim 1, wherein the setting of the conveying rate of the fan (7) is carried out in such a way that a reduction of the actual volume flow or mass flow, resulting from clogging of the filter device (5), is compensated for.

3. The method according to claim 1 or 2, wherein the measuring device (8) has a mass flow sensor and the actual volume flow of the air flow is determined using the measured mass flow.

4. The method according to one of the preceding claims, having a first temperature sensor (11) and comprising the step: measuring a temperature of the air flow in the duct (2) by means of the first temperature sensor (11).

5. The method according to one of the preceding claims, wherein a pressure of the air flow is established in advance during a determination of a density, and in particular is not measured in the duct (2).

6. The method according to one of the preceding claims, comprising the steps:
a. specification of a nominal temperature for the interior (101);
b. measuring the actual temperature in the interior (101) by means of the second temperature sensor (12);
c. setting the conveying rate of the fan (7) and/or setting the heat exchange apparatus (6) in such a way that the actual temperature of the air flow in the interior (101) matches the nominal temperature for the interior (101).

7. The method according to one of the preceding claims, comprising the step: measuring an outside temperature of ambient air by means of the third temperature sensor (13).

8. The method according to one of the preceding claims, comprising the steps:
a. at least partial recirculation of air from the interior (101) via a recirculation duct (9) into an area of the duct (2) located upstream of the heat exchange apparatus (6), and in particular
b. measuring a temperature of the air flow in the recirculation duct (9) by means of the fourth temperature sensor (14).

9. A device (1) for air conditioning an interior (101) of a rail vehicle (100) comprising
- a duct (2) for guiding an air flow in a flow direction having an inlet (3) and an outlet (4) for delivering the air flow into the interior (101), a filter device (5), a heat exchange apparatus (6), a fan (7), and a measuring device (8) for determining a nominal volume flow or nominal mass flow, wherein the measuring device (8) is arranged in the duct (2) downstream in the flow direction of the heat exchange apparatus (6), the fan (7) and the filter device (5), and
- comprising a control unit (10) for setting a conveying rate of the fan (7), said control unit is connected to the measuring device (8) and is designed to carry out the method according to one of the preceding claims.

10. The device (1) according to claim 9, **characterized in that** the measuring device (8) has a mass flow sensor for detecting a mass flow of the air flow and a first temperature sensor (11),
- wherein the first temperature sensor (11) is arranged in the duct (2) downstream of the fan (7) and connected to the control unit (10), and
- the control unit (10) is configured such that it determines a corresponding volume flow from a detected air mass flow and from the temperature detected by the temperature sensor (11), and in particular the volume flow is used for controlling a flow speed.

11. The device (1) according to claim 10, wherein the control unit (10) is configured and connected to the heat exchange apparatus (6) in such a way that the temperature can be set of the air flow in the duct (2) or of the air flowing out of the outlet (4).

12. The device (1) according to one of the preceding claims 9 to 11, **characterized in that** the filter device (5), the heat exchange apparatus (6), the fan (7), and the measuring device (8) are arranged in the duct (2) in this sequence downstream of one another in the flow direction.

13. The device (1) according to one of the preceding claims, **characterized by** a recirculation duct (9) for recirculating air from the interior (101) into an area of the duct (2) which lies upstream of the heat exchange apparatus (6).

14. The device (1) according to claim 13, **characterized by** a fourth temperature sensor (14), which is connected to the control unit (10) for transmitting measurement signals and is arranged in the recirculation duct (9) in such a way that an air temperature can be measured in the recirculation duct (9).

15. A rail vehicle comprising an interior (101), **characterized by** a device (1) for air conditioning according to one of the preceding claims and a second temperature sensor (12) arranged in the interior (101) and comprising, in particular a third temperature sensor (13) provided outside on the vehicle.

## Revendications

1. Procédé d'exploitation d'un dispositif (1) pour climatiser l'espace intérieur (101) d'un véhicule ferroviaire (100), dans lequel le dispositif (1) présente un canal (2) pour conduire un courant d'air dans un sens d'écoulement,
le canal (2) comprend une entrée (3) et une sortie (4) pour délivrer le courant d'air dans l'espace intérieur (101), un dispositif de filtrage (5), un dispositif d'échange de chaleur (6), un ventilateur (7) et un dispositif de mesure (8) pour déterminer un flux massique ou un flux volumique, et le dispositif de mesure (8) est disposé, dans le canal (2), en aval du dispositif d'échange de chaleur (6), du ventilateur (7) et du dispositif de filtrage (5) dans le sens de l'écoulement, et
le procédé présentant les étapes :
a. Prédéfinition d'un flux volumique ou massique de consigne pour le courant d'air ;
b. Détermination d'un flux volumique ou massique réel du courant d'air au moyen du dispositif de mesure (8) ; et
c. Réglage d'un débit du ventilateur (17) en utilisant une unité de réglage (10), de sorte que le flux volumique ou massique s'harmonise avec le flux volumique ou massique de consigne du courant d'air.

2. Procédé selon la revendication 1, dans lequel le réglage du débit du ventilateur (7) est réalisé de manière à compenser une réduction du flux massique ou volumique réel suite à l'obstruction du dispositif de filtrage (5).

3. Procédé selon la revendication 1 ou la revendication 2, dans lequel le dispositif de mesure (8) présente un capteur de flux massique et le flux volumique réel du courant d'air est déterminé en utilisant le flux massique mesuré.

4. Procédé selon l'une quelconque des revendications précédentes, présentant un premier capteur de température (11), comprenant l'étape : mesure d'une température du courant d'air dans le canal (2) au moyen du premier capteur de température (11).

5. Procédé selon l'une quelconque des revendications précédentes, dans lequel, lors d'une détermination d'une densité, une pression du courant d'air est fixée préalablement et, en particulier, n'est pas mesurée dans le canal (2).

6. Procédé selon l'une quelconque des revendications précédentes, comprenant les étapes :
a. Spécification d'une température de consigne pour l'espace intérieur (101) ;
b. Mesure de la température réelle dans l'espace intérieur (101) au moyen du deuxième capteur de température (12) ;
c. Réglage du débit du ventilateur (7) et/ou réglage du dispositif d'échange de chaleur (6) de sorte que la température réelle du courant d'air dans l'espace intérieur (101) s'harmonise avec la température de consigne pour l'espace intérieur (101).

7. Procédé selon l'une quelconque des revendications précédentes, comprenant l'étape : mesure d'une température extérieure d'un air environnant au moyen du troisième capteur de température (13).

8. Procédé selon l'une quelconque des revendications précédentes, comprenant les étapes :
a. Retour, du moins partiel, d'air depuis l'espace intérieur (101) par l'intermédiaire d'un canal de recirculation (9) vers une zone du canal (2) qui se trouve en amont du dispositif d'échange de chaleur (6), et en particulier
b. Mesure d'une température du courant d'air dans le canal de recirculation (9) au moyen du quatrième capteur de température (14).

9. Dispositif (1) de climatisation d'un espace intérieur (101) d'un véhicule ferroviaire (100) comprenant
- un canal (2) pour conduire un courant d'air dans un sens d'écoulement, présentant une entrée (3) et une sortie (4) pour la délivrance du courant d'air dans l'espace intérieur (101), un dispositif de filtrage (5), un dispositif d'échange de chaleur (6), un ventilateur (7) et un dispositif de mesure (8) pour déterminer un flux volumique ou massique de consigne, le dispositif de mesure (8) étant disposé dans le canal (2) dans le sens d'écoulement en aval du dispositif d'échange de chaleur (6), du ventilateur (7) et du dispositif de filtrage (5), et
- une unité de réglage (10) pour régler un débit du ventilateur (7), reliée au dispositif de mesure (8) et aménagée pour réaliser le procédé selon l'une quelconque des revendications précédentes.

10. Dispositif (1) selon la revendication 9, **caractérisé en ce que** le dispositif de mesure (8) présente un capteur de flux massique pour mesurer un flux massique du courant d'air et un premier capteur de température (11),
- dans lequel le premier capteur de température (11) est disposé en aval du ventilateur (7) dans le canal (2) et relié à l'unité de réglage (10), et
- l'unité de réglage (10) est configurée de manière à déterminer, à partir d'un flux massique d'air mesuré et de la température mesurée par le capteur de température (11), un flux volumique correspondant, et en particulier le flux volumique sert de base au réglage d'une vitesse d'écoulement.

11. Dispositif (1) selon la revendication 10, dans lequel l'unité de réglage (10) est configurée et reliée au dispositif d'échange de chaleur (6) de manière à ce que la température du courant d'air dans le canal (2) ou de l'air sortant de la sortie (4) soit réglable.

12. Dispositif selon l'une quelconque des revendications précédentes 9 à 11, **caractérisé en ce que** le dispositif de filtrage (5), le dispositif d'échange de chaleur (6), le ventilateur (7) et le dispositif de mesure (8) sont disposés, dans cet ordre, en aval l'un de l'autre dans le canal (2) dans le sens d'écoulement.

13. Dispositif (1) selon l'une quelconque des revendications précédentes, **caractérisé par** un canal de recirculation (9) pour le retour d'air depuis l'espace intérieur (101) dans une zone du canal (2) qui se trouve en amont du dispositif d'échange de chaleur (6).

14. Dispositif (1) selon la revendication 13, **caractérisé par** un quatrième capteur de température (14) relié à l'unité de réglage (10) pour transmettre des signaux de mesure et disposé dans le canal de recirculation (9) de manière à permettre la mesure d'une température de l'air dans le canal de recirculation (9).

15. Véhicule ferroviaire comportant un espace intérieur (101), **caractérisé par** un dispositif (1) pour la climatisation selon l'une quelconque des revendications précédentes et un deuxième capteur de température (12), disposé dans l'espace intérieur (101), et comprenant, en particulier, un troisième capteur de température (13) prévu à l'extérieur du véhicule.
